# EUROPEAN PATENT APPLICATION

(11) **EP 3 540 190 A1**
(43) Date of publication of application: **18.09.2019**
(21) Application number: 19166705.4
(22) Date of filing: 06.07.2016
(51) Int. Cl.: F01N 3/10, F01N 3/20, F01N 3/035, F01N 13/00

(54) **METHOD FOR THE REMOVAL OF PARTICULATE MATTER AND NOXIOUS COMPOUNDS FROM ENGINE EXHAUST GAS**

(30) Priority: 09.07.2015 DK PA201500402
(62) Divisional of application: 16736837.2
(71) Applicant: UMICORE AG & CO. KG, 63457 Hanau-Wolfgang (DE)
(72) Inventor: JOHANSEN, Keld, 3600 Sundbylille Frederikssund (DK); JANSSENS, Ton, 2880 Bagsværd (DK)

(57) **Abstract**

A method for the removal of volatile organic compounds, particulate matter and nitrogen oxides from exhaust gas of a compression ignition engine comprising the steps of
(a)contacting the exhaust gas with an oxidation catalyst active in oxidation of volatile organic compounds and carbon monoxide to carbon dioxide and water and nitrogen oxide to nitrogen dioxide;
(b)introducing a urea solution into the exhaust gas from step(a) and hydrolysing the urea solution to ammonia;
(c)introducing the thus treated exhaust gas into a plurality of inlet channels of a catalyzed wall flow particle filter and filtering off the particulate matter by passing the exhaust gas through gas permeable porous partition walls into a plurality of outlet channels of the wall flow particle filter and depositing the particulate matter on surface of the walls facing the inlet channels;
(d) removing the deposited particulate matter by reaction with the nitrogen dioxide contained in the exhaust gas and decreasing remaining amounts of NOx in the exhaust gas by contact with an SCR active catalyst in presence of the ammonia, the SCR active catalyst comprises oxides of vanadium and tungsten arranged within the gas permeable porous partition walls and/or on the plurality of the inlet and/or outlet channels of the wall flow particle filter;
(e) removing remaining amounts of NOx and ammonia slip from step (d) and trapping volatile vanadium and tungsten compounds volatilized off the SCR active catalyst in step(d) in a three way catalyst containing high surface metal oxides downstream to step(d).

## Description

The present invention relates to a method for the removal of volatile organic compounds, particulate matter and nitrogen oxides (NOx) from exhaust gas of a compression ignition engine.

The exhaust system of modern vehicles with lean burning engines is typically equipped with an oxidation catalyst, a particulate filter and a catalyst for the selective reduction of NOx (SCR)in presence of a reduction agent.

Oxidation catalysts being active in the oxidation of volatile organic compounds, nitrogen oxide and carbon monoxide and SCR catalysts are known in the art and disclosed in numerous publications.

Typically employed particulate filters (DPF) in diesel exhaust gas cleaning systems, are wall flow filters with a plurality of inlet and outlet channels. The inlet channels are closed at their outlet side and the outlet channels are closed at their inlet side, so that the gas flowing into the filter is forced through porous walls defining the channels, whereby particulate matter is filtered off the gas.

Future emission regulations for diesel passenger cars and trucks require usage of both diesel particulate filter (DPF) technology and NOx reduction catalyst. Due to its potential for fuel optimization and high efficiency in NOx removal, selective catalytic reduction using ammonia as a reductant (NH3-SCR) is presently the preferred technology for NOx reduction.

The SCR catalyst can be arranged as a separate unit upstream and/or downstream the DPF. It has also been suggested in the art providing the DPF with an SCR catalyst to obtain more compact cleaning systems.

Catalysts for use in ammonia SCR are well known in the art. Of those, catalysts based on V₂O₅ and WO₃ supported on a TiO₂ carrier provide a fundamental solution to effectively reduce NOx emissions from Diesel fueled vehicles by means of the Selective Catalytic Reduction (SCR) with ammonia. Compared to alternative strategies for NOx emission control like exhaust gas recirculation (EGR) and zeolite-based catalysts, a great advantage of vanadium-based SCR catalysts is their fuel efficiency and robustness to sulfur.

When operating a cleaning system with a DPF, particulate matter trapped in the filter must from time to time or continuously be removed in order to avoid pressure drop over the filter. An increased pressure drop costs fuel penalty. Therefore, particulate matter accumulated on the filter walls at permeation side of the filter must be removed either by active regeneration, wherein particulate matter is catalytically burned off in contact with an oxidation catalyst supported on the filter walls in combination with oxygen at increased exhaust gas temperatures or by non-catalytic passive regeneration.

In the passive soot regeneration the DPF is regenerated at temperatures below 550°C with NO₂ that is generated over the upstream DOC by oxidation of NO. Regeneration with oxygen in exhaust gas should be avoided in order to control the temperature below 550°C.

Despite being effective SCR catalysts, vanadium oxide based catalysts contain V₂O₅ as an essential component, which is toxic. Reports in the literature suggest that bulk V₂O₅ has a significant vapor pressure at temperatures relevant to active filter regeneration, and both V and W compounds react with water to form species with increased vapor pressure.

Measurable amounts of vanadium are first released at temperatures of above 600 °C, which is around the highest applicable operation temperature of these systems.

Consequently, there is a risk that V and W volatile compounds can vaporize from the V₂O₅/WO₃/TiO₂ SCR catalysts in particular when integrated in the DPF. The temperature in V-SCR catalysed DPF has the lowest probability of being exposed to temperatures exceeding 600°C when managed with passive soot regeneration with nitrogen dioxide, but in severe events the temperature of the V-SCR catalyst can increase above 600°C and trigger evaporation of these compounds.

Beside the risk of emission of vanadium and tungsten compounds into the atmosphere, ammonia slip from the SCR reaction has also to be considered. To obtain a maximum NOx conversion, ammonia is typically added to the exhaust gas in over stoichiometric amounts and unreacted ammonia is emitted to the atmosphere.

The present invention seeks to solve the above problems when employing vanadium and tungsten oxides as effective ammonia SCR catalyst and over stoichiometric amounts of ammonia reductant in the SCR reaction in a method for the removal of particulate matter and noxious compounds including nitrogen oxides from an engine exhaust gas by combining a vanadium and tungsten adsorbent with an ammonia oxidation catalyst downstream the SCR catalyst.

Thus, the present invention is in its broadest aspect a method for the removal of volatile organic compounds, particulate matter and nitrogen oxides from exhaust gas of a compression ignition engine comprising the steps of
(a)contacting the exhaust gas with an oxidation catalyst active in oxidation of volatile organic compounds and carbon monoxide to carbon dioxide and water and nitrogen oxide to nitrogen dioxide;
(b)introducing a urea solution into the exhaust gas from step(a) and hydrolysing the urea solution to ammonia;
(c)introducing the thus treated exhaust gas into a plurality of inlet channels of a catalyzed wall flow particle filter and filtering off the particulate matter by passing the exhaust gas through gas permeable porous partition walls into a plurality of outlet channels of the wall flow particle filter and depositing the particulate matter on surface of the walls facing the inlet channels;
(d) removing the deposited particulate matter by reaction with the nitrogen dioxide contained in the exhaust gas and decreasing remaining amounts of NOx in the exhaust gas by contact with an SCR active catalyst in presence of the ammonia, the SCR active catalyst comprises oxides of vanadium and tungsten arranged within the gas permeable porous partition walls and/or on the plurality of the inlet and/or outlet channels of the wall flow particle filter;
(e) removing remaining amounts of NOx and ammonia slip from step (d) and adsorbing volatile vanadium and tungsten compounds volatilized off the SCR active catalyst in step(d) in a three way catalyst downstream to step (d having an NH3-SCR activity, an ammonia oxidation activity and an adsorption capacity for volatile vanadium and tungsten compounds volatilized off the SCR active catalyst of the particulate filter (c), the three way catalyst comprising high surface compounds selected from high surface metal oxides, zeolites, silica, non-zeolite silica alumina, and mixtures thereof.

Several oxides have the property to adsorb evaporated compounds of vanadium and tungsten. Oxides of vanadium, tungsten and titanium admixed with at least one of a high surface ceria, alumina, silica, zirconia, non-zeolite silica alumina and zeolites, have shown as useful V and W compounds adsorbent and are at the same time active in the SCR reaction. These adsorbents are preferably combined with an ammonia slip catalyst (ASC).

Typical ASC formulations consist of an ammonia oxidation function based on platinum, optionally combined with palladium on an alumina or titania carrier and an SCR active catalyst. In preferred formulations for use in the invention the V,W adsorbent is applied together with an SCR catalyst as a top layer on a bottom layer with the ammonia oxidation catalyst. Both layers can contain binding phases of oxide ceramics as alumina, titania, silica-alumina that have V,W adsorbing capacity.

In preferred formulations the V,W adsorbent is applied as a top layer on a bottom layer with the ASC. Both layers can contain binding phases of oxide ceramics as alumina, titania, silica-alumina that have V,W adsorbing capacities.

In a specific embodiment of the invention, the three way catalyst comprises a bottom layer comprising platinum, alumina and/or titania and optionally palladium, coated on a substrate and/or partly or entirely forming the substrate and a top layer comprising oxides of vanadium, tungsten and titanium admixed with at least one of a high surface ceria, alumina, silica, zirconia, non-zeolite silica alumina and zeolite.

As the three way catalyst is arranged at the coldest position in the exhaust system any potentially evaporated V and W compounds will be trapped in the three way catalyst during the life time of the exhaust system on a vehicle.

Good vanadium and tungsten adsorption efficiencies are achieved with a relatively thick top layer in the three way catalyst.

Thus, in preferred embodiments the top layer has layer thickness of between 40 µm and 250 µm.

In further a preferred embodiment the bottom layer has a layer thickness of between 5µm and 80 µm. When the bottom layer itself forms partly or entirely the substrate, the layer thickness is up to 450 µm.

In order to assure sufficient permeation of ammonia from the top layer to the bottom layer, the top layer must be relatively porous.

Thus, in further a preferred embodiment the top layer has a porosity of between 20 % and 80 %.

Preferably the three way catalyst is arranged on a substrate with a flow through monolith shape.

When coated on a flow through monolith, the amount of the top layer in the three way catalyst is between 50 to 500 g per liter of the flow through monolith.

The amount of the bottom layer in the three way catalyst is preferably between 5 and 255 g per liter of the flow through monolith, the amount depends on whether the bottom layer is coated on the surface of the monolith substrate or partly or entirely forms the monolith substrate.

Good ammonia oxidation activities of the three way catalyst are obtained, when the bottom layer of the three way catalyst contains 0.0018g - 0.35 g platinum and/or palladium per liter of the flow through monolith.

The top layer of the three way catalyst comprises preferably per liter of the flow through monolith 1.0g-20g vanadium pentoxide, 3g-40 g tungsten oxide, 40g-460g titania, and 0g-86g silica, 0g- 86g ceria, 0g-86g alumina, 0g-86g non-zeolite silica alumina and 0g-86g of a zeolite.

Hereby it is ensured that volatile vanadium and tungsten compounds are essentially adsorbed on the surface of the binding material and that remaining amounts of NOx from the upstream steps are selectively reduced to nitrogen and water by the SCR reaction.

In the above embodiments of the invention it is preferred that the oxidation catalyst in step (a) upstream of the DPF comprises platinum and palladium supported on silica-alumina and/or alumina and/or titania with a weight ratio of platinum to palladium of 1:0 to 1:1.

The content of platinum and/or palladium in the DOC is preferably 0.1 and 2g per liter catalyst.

In still an embodiment, it may be preferred that the method comprises a further step of decreasing remaining amounts of NOx in the exhaust gas from step (d) by reaction with ammonia in contact with an SCR active catalyst comprising oxides of vanadium, tungsten and titanium, the catalyst arranged between step (d) and (e).

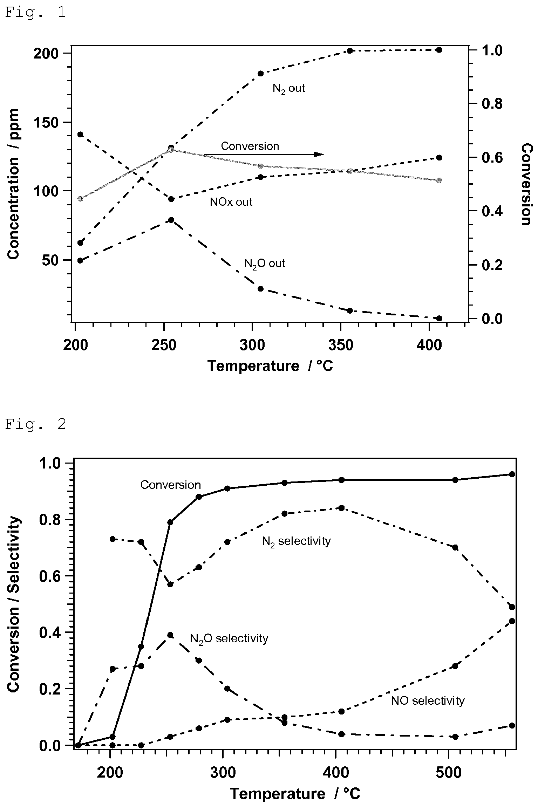

Figure 1 displays the NOx conversion, together with the outlet concentrations of NOx, N₂O, and N₂. The performance under these conditions in NH₃-SCR is documented by a conversion of about 50-60% in the temperature range of interest (250-400 °C) with a low yield of N₂O and a high yield of N₂. Fig. 1 shows NOx conversion for NH3-SCR and outlet concentrations of NOx, N2, and N2O for a Pt/V-W-oxide based monolith three way catalyst, using a feed of 250 ppm NOx, 300 ppm NH3, 12% O2, and 4 % water in nitrogen at a space velocity of 100000 h⁻¹.
Figure 2 shows the conversion of ammonia, and selectivities to N2, NOx, N2O in the selective oxidation to ammonia. In the temperature range of interest (250-400 C), the ammonia is almost completely converted and the reaction product consists mainly of nitrogen. Fig. 2 shows NH₃ conversion for selective oxidation of ammonia and selectivities to NOx, N₂, and N₂O for a Pt/V-W-oxide based monolith three way catalyst, using a feed of 200 ppm NH₃, 12% O₂, and 4 % water in nitrogen at a space velocity of 100000 h⁻¹.

### EXAMPLE 1

This example demonstrates the performance in NH₃-SCR of a three way catalyst. The catalyst consists of Pt impregnated on a glass fiber paper based monolith that is reinforced with TiO₂, on top of which a washcoat layer, containing vanadium and tungsten, titanium dioxide and silica, having NH₃-SCR activity, is applied. The Pt content in the catalyst was 88 mg/l. The content of the SCR active washcoat layer was 197 g/l, of which 5% was silica. The catalyst was degreened at 550 °C for 1 hour prior to the performance test. The reactor feed gas consisted of 250 ppm NOx, of which less than 5% is present as NO₂, 300 ppm NH₃, 12 % O₂, and 4 % water in nitrogen. The flow rate was adjusted to reach a space velocity of 100000 h⁻¹, based on the monolith volume.

### EXAMPLE 2

This example shows the performance of the three way catalyst, as characterized in Example 1, for selective oxidation of ammonia to reduce ammonia slip. The catalyst was degreened for 1 h at 550 C. The feed gas used in this measurement was 200 ppm NH3, 12 % O2 and 4 % water in nitrogen. The flow was adjusted to reach a space velocity of 100000 h-1 based on the monolith volume.

## Claims

1. A method for the removal of volatile organic compounds, particulate matter and nitrogen oxides from exhaust gas of a compression ignition engine comprising the steps of
(a)contacting the exhaust gas with an oxidation catalyst active in oxidation of volatile organic compounds and carbon monoxide to carbon dioxide and water and nitrogen oxide to nitrogen dioxide;
(b)introducing a urea solution into the exhaust gas from step(a) and hydrolysing the urea solution to ammonia;
(c) introducing the exhaust gas from step (b) into an SCR active catalyst comprising oxides of vanadium and tungsten;
(d)introducing the exhaust gas from step (c) into a plurality of inlet channels of a catalyzed wall flow particle filter and filtering off the particulate matter by passing the exhaust gas through gas permeable porous partition walls into a plurality of outlet channels of the wall flow particle filter and depositing the particulate matter on surface of the walls facing the inlet channels;
(e) removing remaining amounts of NOx and ammonia slip from step (d) and adsorbing volatile vanadium and tungsten compounds volatilized off the SCR active catalyst in step(d) in a three way catalyst downstream to step (d) having an NH3-SCR activity, an ammonia oxidation activity and an adsorption capacity for volatile vanadium and tungsten compounds volatilized off the SCR active catalyst of the particulate filter (c), the three way catalyst comprising high surface compounds selected from high surface metal oxides, zeolites, silica, non-zeolite silica alumina, and mixtures thereof.

2. The method of claim 1 comprising the further step of decreasing remaining amounts of NOx in the exhaust gas from step (d) by reaction with ammonia in contact with an SCR active catalyst comprising oxides of vanadium, tungsten and titanium, the catalyst is arranged between step (d) and (e).

3. The method according to claim 1 or 2, wherein the three way catalyst comprises a bottom layer comprising platinum, alumina and/or titania, optionally palladium coated on a substrate and/or partly or entirely forming the substrate and a top layer comprising oxides of vanadium, tungsten and titanium admixed with at least one of a high surface ceria, alumina, silica, zirconia, non-zeolite silica alumina and zeolite.

4. The method according to claim 3, wherein the top layer has layer thickness of between 40 µm and 250 µm.

5. The method of claim 3 or 4, wherein the bottom layer has a layer thickness of between 5µm and 450µm.

6. The method of any one of claims 3 to 5, wherein the top layer has a porosity of between 20% and 80%.

7. The method according to any one of claims 1 to 6, wherein the three way catalyst is coated on a substrate with a flow through monolith shape.

8. The method according to any one of claims 1 to 7, wherein the SCR active catalyst in step (c) further comprises titania.

9. The method according to claim 7 or 8, wherein the amount of the top layer in the three way catalyst is between 50 to 500 g per liter of the substrate.

10. The method according to any one of claims 7 to 9, wherein the amount of the bottom layer in the three way catalyst is between 5 and 255g per liter of the substrate.

11. The method according to any one of claims 3 to 10, wherein the bottom layer of the three way catalyst contains 0.0018g-0.35g platinum and/or palladium per liter of the substrate.

12. The method according to any one of claims 3 to 11, wherein top layer of the three way catalyst comprises per liter of the flow through monolith 1.0g-20g vanadium pentoxide, 3g-40g tungsten oxide, 40g-460 g titania, and 0g-86 g silica, 0g-86g ceria, 0g-86g alumina, 0g-86g non-zeolite silica alumina and 0g-86g of a zeolite.

13. The method according to any one of claims 1 to 12, wherein the oxidation catalyst in step (a) comprises platinum and/or palladium supported on silica-alumina and/or alumina and/or titania with a weight ratio of platinum to palladium of 1:0 to 1:1.

14. The method according to claim 13, wherein the content of platinum and/or palladium is between 0.1g and 2g per liter catalyst.
